# EUROPEAN PATENT SPECIFICATION

(11) **EP 3 299 286 B1**
(45) Date of publication and mention of the grant of the patent: **29.04.2020**
(21) Application number: 17192698.3
(22) Date of filing: 22.09.2017
(51) Int. Cl.: B64D 35/00, B60T 1/06, F16H 57/04, B64C 27/12, F16D 55/00

(54) **AIRCRAFT DRIVE SYSTEM**
FLUGZEUGANTRIEBSSYSTEM
SYSTÈME DE TRANSMISSION POUR AÉRONEF

(30) Priority: 23.09.2016 US 201662399097 P; 17.11.2016 US 201662423371 P; 13.09.2017 US 201715702912
(43) Date of publication of application: 28.03.2018
(73) Proprietor: Bell Helicopter Textron Inc., Fort Worth, TX 76101 (US)
(72) Inventor: POSTER, Scott David, Arlington, TX 76016 (US); RILEY, Walter, Fort Worth, TX 76101 (US); COPE, Gary, Keller, TX 76248 (US); SPELLER Jr, Charles Hubert, Flower Mound, TX 75028 (US)
(74) Representative: Barker Brettell LLP

(56) References cited:
- EP-A1- 0 739 815
- WO-A1-2016/018498
- US-A- 4 479 619
- US-A1- 2005 151 001
- US-A1- 2006 266 883
- US-B1- 6 302 356
- US-B2- 7 118 328
- Anonymous: "Sikorsky Archives | S-65/H-53A/D Sea Stallion/ H-53E Super Stallion", , 31 July 2013 (2013-07-31), XP055591783, Retrieved from the Internet: URL:https://www.sikorskyarchives.com/S-65H -53D%20SEA%20STALLION.php [retrieved on 2019-05-24]
- Anonymous: "CH-53E New Ep's Flashcards", , 1 November 2016 (2016-11-01), XP055591788, Retrieved from the Internet: URL:https://www.flashcardmachine.com/ch-53 eneweps.html [retrieved on 2019-05-24]

## Description

### TECHNICAL FIELD OF THE INVENTION

The present invention relates in general to the field of drive systems, and more particularly, to a novel drive system configuration for use in an aircraft, for example, a rotorcraft.

### BACKGROUND OF THE INVENTION

Without limiting the scope of the invention, its background is described in connection with rotorcraft drive systems.

Since their inception, rotorcraft and rotorcraft drive systems have been improved to reduce the possibility of failure during flight. Toward that end, a number of modifications have been made to drive systems to improve reliability. However, despite advances in materials and design, a number of failures continue to occur that affect rotorcraft performance. One example of a problem with current rotorcraft drive systems is that, in some instances, the failure of single drive system component leads to failure of the entire drive system. Another example is a loss of lubrication event that causes the loss of torque transmission by drive system subcomponents such as gearboxes or accessories connected to the main rotor gearbox.

More particularly, the failure of a single gearbox or shaft connected to the main rotor gearbox can significantly impact operations. For example, if there is a loss of lubrication to a gearbox, the gearbox loses torque transmission, causing damage to upstream or downstream components. The same can occur when a shaft becomes unbalanced (or breaks), which can damage couplings, gearboxes and even the main rotor gearbox. Unfortunately, when a portion of a drive system experiences a failure or reduction in performance, the concomitant reduction in power leads to challenges with flight performance.

Thus, a need remains for improving the overall safety and reliability of rotorcraft drive systems that include the connections between the engines and the main rotor gearbox, reduction and accessory gearboxes, shafts, generators, oil pumps, and accessories connected to the main rotor gearbox. Specifically, systems and methods that minimize the number of single load path components, provide maximum system separation and redundancy, minimize maintenance required and maintenance related incidents, minimize the potential of loss of lubrication events, and maximize main rotor gearbox loss of lubrication capability are desirable, including systems and methods for cooling components and systems during normal operations and during loss of lubrication events.

US6302356B1 discloses a twin turbine engine helicopter having a two-stage main reduction gearbox, the input stage having a speed reduction ratio exceeding 5.5:1, into an epicyclic gear train second stage ratio about 6:1 for approximately 30:1 or higher overall ratio output to the main rotor. The first stage uses face gears, or bevel gears, with a reduction greater than 5.5:1 and a second stage epicyclic gear train using single or double row helical or spur gears.

US2005/151001A1 discloses a hybrid combination of a helicopter and a fixed wing aircraft. A conventional helicopter is modified with a nose-mounted tractor propeller to provide thrust for forward flight. Wings are added to provide lift during forward flight. With the propeller providing thrust and the wings lift during forward flight, the helicopter rotor blades are unloaded during cruising flight to allow increased forward speed by avoiding limitations of conventional helicopters, including retreating rotor blade stall and maximum rotor blade tip speeds. A single powerplant drives both the main rotor and the nose-mounted propeller. The compound helicopter employs high aspect ratio wings with large flaps that may be extended to reduce vertical drag during vertical flight and hovering operations.

US2005/201863A1 discloses an active vibration control (AVC) system includes a shaft-driven gearbox mounted force generator (GMFG) mounted to a main rotor transmission. The GMFGs receive shaft power from an output shaft driven by the main rotor transmission and/or engine-to-transmission gearbox to avoid separate drive motors.

US4479619A discloses a helicopter transmission system in which drive from three engines is transmitted to two output channels each of which is divided by dividing means to drive two output pinions meshed with a common combining gear rotationally fixed to a sustaining rotor drive shaft. Balancing means are provided to balance the torque transmitted by the respective pairs of output pinions and, in the described embodiment, the balancing means comprise a plurality of meshing spur gears arranged with one of the spur gears drivingly connected to one of the engines and a further two of the spur gears are drivingly connected respectively to the two output channels. A further one of the spur gears provides a power take off to an anti torque rotor drive shaft.

EP0739815A1 discloses a helicopter transmission where each engine is directly coupled to an engine deceleration device composed of a traction speed change mechanisms and a planetary speed change mechanism, and is decelerated at a desired speed change ratio, and rotate and drive a collector gear and a main rotor shaft. The collector gear rotates and drives accessories and a tail rotor through a second traction speed change mechanism changing speed in inverse number of the speed change ratio of the traction speed change mechanisms. Thus, the rotating speed of the engines can be continuously decelerated at an arbitrary speed change ratio, and an engine deceleration device of small size, light weight, and low loss is realized. At the same time, a power transmission device for helicopters capable of changing the rotating speed of the main rotor at a constant engine rotating speed is realized.

US2006/266883A1 discloses a gearbox for a high speed compound rotary-wing aircraft including a main module, an input module and a translational thrust module. The input module receives power from the engines to drive a dual, contra-rotating, coaxial main rotor system and a translational thrust system which provides significant translational thrust generally parallel to an aircraft longitudinal axis. Each of a multiple of engine drives the input module such that power is distributed to the main module and the translational thrust module.

WO2016/018498A1 discloses a gearbox oil cooling assembly for a gearbox driving a drive shaft having a drive shaft coupling. The assembly includes a heat exchanger to receive and cool an oil from the gearbox and having an inlet. Also included is an impeller axially disposed between the heat exchanger and the drive shaft coupling, wherein the impeller is operatively coupled to, and rotated by, the drive shaft operatively coupled to the drive shaft coupling. Further included is an exhaust duct operatively coupled to the heat exchanger and disposed radially outwardly around the impeller and defining an airflow pathway through which air passes through the inlet, the impeller and through the exhaust duct according to the rotation of the impeller to cool the oil in the heat exchanger.

### SUMMARY OF THE INVENTION

In one aspect, the present invention includes an aircraft dual drive system as defined in claim 1. In one embodiment, the first and second engine reduction gearboxes comprises a plurality of gears that reduce a shaft speed from the first and second engines from a high speed at or near turbine engine speed of greater than 10,000 revolutions per minute at an input of the first and second engine reduction gearboxes, respectively, to a speed substantially lower than the high speed, a low speed of less than about 6,000 revolutions per minute at an output of the first and second engine reduction gearboxes. In another embodiment, the drive system further comprises a drive shaft with flexible couplings connecting each of the first and second engine reduction gearboxes to the first and second inputs of the main rotor gearbox, respectively. In another embodiment, each of the first and second engine reduction gearboxes is independently lubricated and cooled. In another embodiment, each of the first and second engine reduction gearboxes are configured to be independently decoupled from the main rotor gearbox. In another embodiment, an output shaft comprises a tail rotor disc brake and calipers for slowing or stopping the drive system. In another embodiment, the main rotor gearbox comprises a low speed overhung planetary gear system. In another embodiment, drive system further comprises a drive shaft assembly connected to an output of the main rotor gearbox, wherein the drive shaft assembly comprises one or more drive shafts, each of the drive shafts connected to one or more bearing assemblies, the drive shaft assembly having a proximal and a distal end, and an intermediate gear box connected to the distal end of the one or more drive shafts, wherein the intermediate gear box is connected to a tail rotor gearbox via a tail rotor drive shaft. In another embodiment, drive system further comprises at least one of: one or more accessory gearboxes, one or more cooling fans, or one or more oil pumps, one or more hydraulic power packs, or one or more generators, each connected directly or indirectly to the main rotor gearbox independently. In another embodiment, drive system further comprises an oil cooler mounted directly to the main rotor gearbox. In another embodiment, drive system further comprises two or more hydraulic power packs wherein each of the two or more hydraulic power packs is independent from and redundant with the other hydraulic power packs. In another embodiment, drive system further comprises two or more oil cooler blowers wherein each of the two or more oil cooler blowers is independent from and redundant with the other oil cooler blowers. In another embodiment, drive system further comprises two or more generators wherein each of the two or more generators is independent from and redundant with the other generators.

In another aspect, the present invention includes a method of providing redundant power to a main rotor gearbox as defined in claim 2. In one embodiment, the first and second engine reduction gearboxes comprises a plurality of gears that reduce a shaft speed from the first and second engines from up to a high speed at or near turbine engine speed of greater than 10,000 revolutions per minute at an input of the first and second engine reduction gearboxes, respectively, to a speed substantially lower than the high speed, a low speed of less than about 6,000 revolutions per minute at an output of the first and second engine reduction gearboxes. In another embodiment, the method further comprises connecting a drive shaft with flexible couplings between each of the first and second engine reduction gearboxes and the first and second inputs of the main rotor gearbox, respectively. In another embodiment, each of the first and second engine reduction gearboxes is independently lubricated and cooled. In another aspect, each of the first and second engine reduction gearboxes are configured to be independently decoupled from the main rotor gearbox. In another embodiment, an output shaft comprises a tail rotor disc brake and calipers for slowing or stopping the drive system. In another embodiment, the main rotor gearbox comprises a low speed overhung planetary gear system. In another embodiment, the method further comprises connecting a drive shaft assembly to an output of the main rotor gearbox, wherein the drive shaft assembly comprises one or more drive shafts, each of the drive shafts connected to one or more bearing assemblies, the drive shaft assembly having a proximal and a distal end, and an intermediate gear box connected to the distal end of the one or more drive shafts, wherein the intermediate gear box is connected to a tail rotor gearbox via a tail rotor drive shaft. In another embodiment, the method further comprises providing at least one of: one or more accessory gearboxes, one or more cooling fans, or one or more oil pumps, one or more hydraulic power packs, or one or more generators, each connected directly or indirectly to the main rotor gearbox independently. In another embodiment, the method further comprises mounting an oil cooler directly to the main rotor gearbox. In another embodiment, the method further comprises mounting two or more hydraulic power packs wherein each of the two or more hydraulic power packs is independent from and redundant with the other hydraulic power packs. In another embodiment, the method further comprises mounting two or more oil cooler blowers wherein each of the two or more oil cooler blowers is independent from and redundant with the other oil cooler blowers. In another embodiment, the method further comprises mounting two or more generators wherein each of the two or more generators is independent from and redundant with the other generators.

In another embodiment, the present invention includes a helicopter, comprising: a fuselage; a main rotor gearbox comprising a first and a second input coupled to the fuselage; at least a first and a second engine; a first drive system comprising a first engine reduction gearbox connecting a first engine to the first input of the main rotor gearbox at a reduced shaft speed; a second drive system independent from and redundant with the first drive system, the second drive system comprising a second engine reduction gearbox connecting a second engine to the second input of the main rotor gearbox at the reduced shaft speed; and a rotor system connected to the main rotor gearbox to provide flight.

In addition to the foregoing, various other method, system, and apparatus aspects are set forth in the teachings of the present disclosure, such as the claims, text, and drawings forming a part of the present disclosure.

The foregoing is a summary and thus contains, by necessity, simplifications, generalizations, and omissions of detail. Consequently, those skilled in the art will appreciate that this summary is illustrative only and is not intended to be in any way limiting. There aspects, features, and advantages of the devices, processes, and other subject matter described herein will be become apparent in the teachings set forth herein.

### BRIEF DESCRIPTION OF THE DRAWINGS

For a more complete understanding of the features and advantages of the present invention, reference is now made to the detailed description of the invention along with the accompanying figures and in which:
FIG. 1 shows a side view of a helicopter according to a preferred embodiment of the present application;
FIG. 2 shows a partial cross-section, perspective view of helicopter aircraft according to an alternative embodiment of the present application;
FIG. 3 shows an isometric view of a drive system that depicts the present invention.
FIG. 4 shows a close-up, isometric view of a fan assembly for use with the drive system of the present invention.
FIG. 5 shows an isometric view of another portion of the drive system that provides system separation and redundancy.
FIG. 6 shows a main rotor gearbox of a helicopter according to an embodiment of the present application

### DETAILED DESCRIPTION OF THE INVENTION

Illustrative embodiments of the system of the present application are described below. In the interest of clarity, not all features of an actual implementation are described in this specification. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The present invention addresses the problems with drive systems in use today that are known to lead to rotorcraft failure. More particularly, the drive system of the present invention was designed to overcome drive system failures by including one or more of the following design features: (1) minimize the number of single path drive system components; (2) provide maximum system separation and redundancy; (3) minimize maintenance requirements and maintenance related incidents; (4) minimize the potential of loss of lubrication events; and/or (5) maximize main rotor gearbox loss of lubrication capability. The rotorcraft drive system described herein includes, e.g., dual engine reduction gearboxes completely isolated from the remainder of drive system via freewheeling clutches in the main rotor gearbox, dual accessory gearboxes separate from the main rotor gearbox, and the distribution of the gearbox driven accessories among the separate systems, among other improvements.

The present invention was developed to address the failures common to rotorcraft drive systems and is based on a completely new design and application of new technology to rotorcraft safety. More particularly, the new rotorcraft drive system is focused in an unparalleled manner on safety and redundancy. The goal of safety drove the design and development of the unique layout and configuration of the rotorcraft drive system described herein, which incorporates unique features and system separation that protects primary aircraft systems from the most common drive system failures. The drive system has also been designed to maximize the operational capability in the event of an uncommon failure, such as a loss of lubrication.

Moreover, the present inventors recognized that high-speed gearing and the associated heat generation is always an area of concern for gearbox survivability. The ability to continue torque transmission, particularly in a loss of lubrication scenario, is of great importance. For this reason, the drive system described herein includes two separate reduction gearboxes (RGB's), each one connected to a separate engine and independent from the Main Rotor Gearbox (MRGB). The reduction gearboxes are fully self-contained and separate from each other, each reducing the engine output speed from a high speed at or near turbine engine speed of greater than 10,000 RPM to a speed substantially lower than the high speed, a low speed of less than about 6,000 RPM, prior to transmitting torque to the MRGB. With this drive system arrangement high-speed gearing is contained in separate gearboxes, as such, the survivability of the total drive system is greatly enhanced, particularly in the event of high-speed gear failure or loss of lubricant in an individual RGB.

According to one embodiment, the MRGB has additional unique features including the low speed (less than about 6,000 RPM) input. The use of independent RGBs that connect to a single low speed overhung planetary gear system in the MRGB reduces rotating part count and heat generation. Low gear count is achieved by the use of compound gears that incorporate compartmentalized lubrication recovery elements and one or more independent and monitored chip detectors. With maintenance in mind, the drive system allows for a short mast top case assembly that allows swapping of the top case and mast without removal of the main rotor gearbox from the aircraft. The MRGB also includes a clutch for each input of the reduction gearboxes that allows each reduction gearbox to be separately and independently disconnected from the MRGB.

High-speed gearing and the associated heat generation is always an area of concern for gearbox survivability. The ability to continue torque transmission, particularly in a loss of lubrication scenario is of great importance. For this reason, the present invention includes a powertrain for a rotorcraft that includes two separate engine reduction gearboxes (RGB), e.g., one RGB for each engine of a two-engine rotorcraft. The reduction gearboxes are fully self-contained and separate from each other, reducing the engine output speed from a high speed at or near turbine engine speed of greater than 10,000 RPM to a speed substantially lower than the high speed, e.g., a low speed of less than about 6,000 RPM, prior to transmitting torque to the main rotor gearbox

(MRGB). This rotational speed reduction is accomplished with, e.g., a simple three (3)-gear reduction. The rotational reduction can be accomplished with 2, 3, 4, 5, 6 or more gears; however, a 3 gear system provided the requisite reduction. Each RGB has its own self-contained lubrication system consisting of pump, filter, oil monitoring sensors, and a unique core in the aircraft cooler assembly.

With this arrangement, where high-speed gearing is contained in separate gearboxes, the survivability of the total drive system is greatly enhanced, particularly in the event of high speed gear failure or loss of lubricant in an individual RGB. Each reduction gearbox can be disconnected from the MRGB by a clutch.

The Main Rotor Gearbox (MRGB) transmits torque from the Reduction Gearboxes (RGB) to the main rotor mast, the accessory gearboxes, the hydraulic pump and generator that is mounted to the MRGB, and to the tail rotor drive shaft.

The drive system of the present invention can also take advantage of a number of additional features that minimize the possibility of loss of lubricant and to maximize the operational time if a loss of lubricant event does occur. For example, the drive system can also include one or more of the following: (1) the use of transfer tubes for cooler and filter mounting to eliminate the loss of lubricant in the event of loss of attachment fastener torque; (2) using an oil cooler mounted directly to the main rotor gearbox eliminating external hoses; (3) the use of all oil filter bowls are screw-on instead of held-on with small fasteners eliminating fastener failure issue from repeated removals; (4) the elimination of a high speed planetary and the heat generation associated with it during a loss of lubrication event; (5) the use of gear tooth geometry specifically designed to minimize sliding reducing heat generation at the teeth and the tendency to score during a loss of lubrication event; (6) the use of coarse pitch power gears with clearance or backlash allowing for the expansion during high heat loss of lubrication events; (7) the use of high hot hardness material utilized for primary torque carrying components maximizing their continued operation in the event of a loss of lubrication event; (8) the use of ring gear and case joint design to efficiently transmit heat away from the planetary gears in the event of a loss of lubrication event; and/or (9) the use of isotropic super finished gear teeth resulting in a greatly improved surface finish and maximizing the ability of these gears to operate in a reduced lubrication environment.

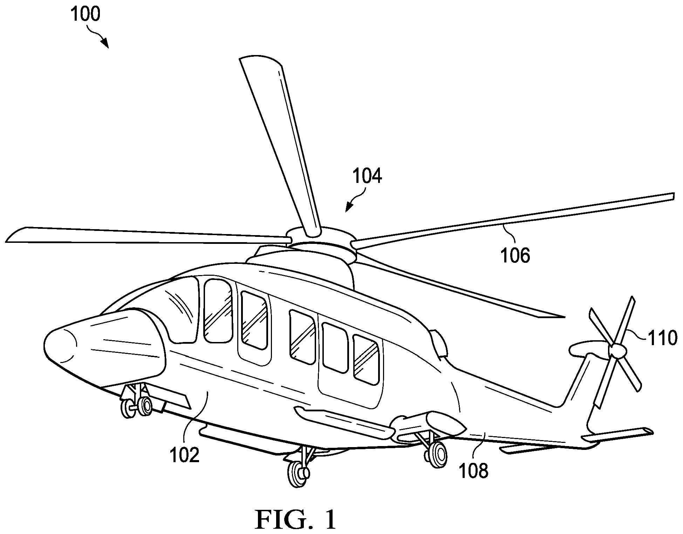

FIG. 1 shows a helicopter 100 in accordance with a preferred embodiment of the present application. In the exemplary embodiment, aircraft 100 is a helicopter having a fuselage 102 and a rotor system 104 carried thereon. A plurality of rotor blades 106 is operably associated with a rotor system 104 for creating flight. A tail boom 108 is depicted that further includes tail rotor 110.

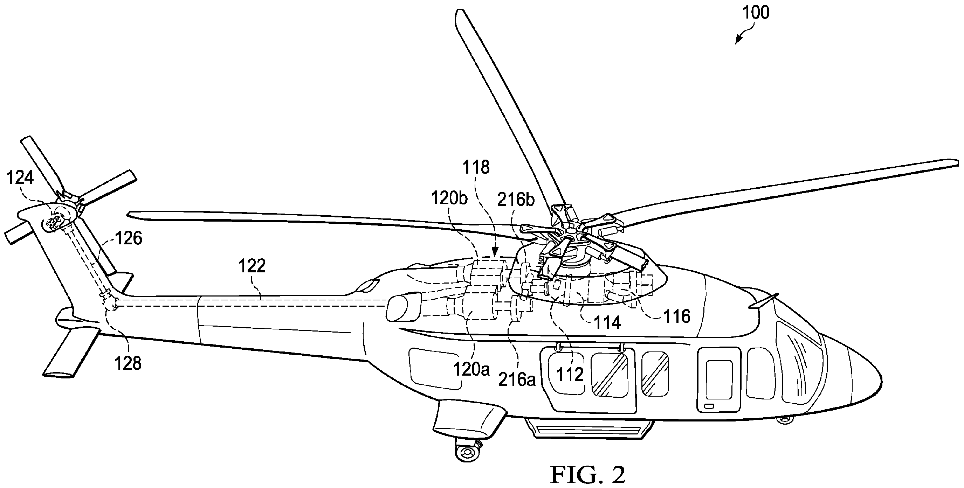

For example, FIG. 2 shows a partial cross-section perspective view of helicopter 100 that includes additional detail of an embodiment of the present invention. Helicopter 100 further includes a rotor mast 112, which is connected to the main rotor gearbox 114. The main rotor gearbox 114 is connected to one or more accessory gear boxes 116 and one or more engine reduction gearboxes 216a, 216b. Each engine reduction gearbox 216a, 216b is connected to one or more engines 120a, 120b, which are within an engine compartment 118. A tail rotor drive shaft 122 transmits mechanical rotation from the main rotor gearbox 114 to the tail rotor gear box 124, which is connected via tail rotor drive shaft 126 and intermediate gear box 128.

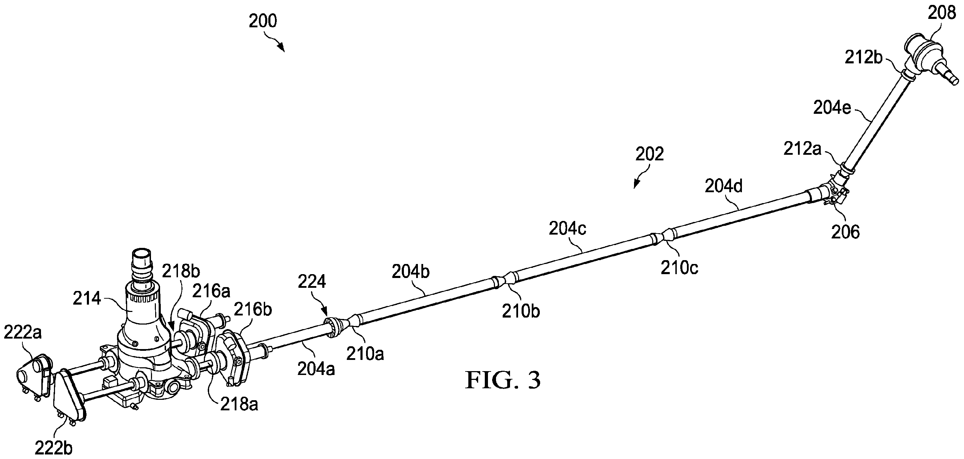

FIG. 3 shows a drive system 200 that includes a drive shaft assembly 202 that includes multiple drive shafts 204a, 204b, 204c, and 204d. Drive system 200 can also include a tail rotor drive shaft 204e. The drive shafts may be made from composite material, aluminum, titanium, or the like. In one example, drive shaft 204a is an aluminum driveshaft while the remaining drive shafts 204b, 204c, 204d, and 204e are composite drive shafts. Aluminum might be selected for the drive shaft 204a nearest the engines in order to maintain mechanical integrity in a high temperature environment, including, for instance, in the event of an engine fire. In another example, drive shafts 204a, 204b, 204c, 204d, and 204e are composite drive shafts. The drive shafts 204a, 204b, 204c, and 204d of drive shaft assembly 202 are connected by assemblies 210a, 210b, 210c (e.g., flexible couplings and hanger bearing assemblies) within the tail boom and under the engine(s). Where one or more of the drive shafts 204a, 204b, 204c, 204d, and 204e are composite drive shafts, a fan assembly 224 may be integrated into one or more connection assemblies 210a, 210b, 210c. For instance, where the drive shaft 204a nearest the engines is composite, a fan assembly 224 may be integrated into connection assembly 210a to provide air flow around drive shaft 204a in order to reduce the temperatures to which drive shaft 204a is normally exposed or to reduce the temperatures under abnormal conditions (e.g., in the event of an engine fire).

The drive shaft assembly 202 is connected at a distal end to an intermediate gearbox 206, which is connected to tail rotor gearbox 208 via drive shaft 204e and flexible couplings 212a, 212b. The proximal end of the drive shaft assembly 202 is connected to the main rotor gearbox, which is powered by two engine reduction gearboxes 216a, 216b, thereby providing redundant power to the main rotor gearbox 214 and the drive shaft assembly 202. Each of the engine reduction gearboxes 216a, 216b are sized to provide sufficient power to maintain flight to the main rotor gearbox 214 and to the drive shaft assembly 202 that is connected to the tail rotor gearbox 208. Each of the engine reduction gearboxes 216a, 216b is connected to the main rotor gearbox 214 via main rotor gearbox input shafts 218a, 218b and each of the engine reduction gearboxes 216a, 216b are connected to an engine (not depicted), e.g., a turboshaft engine. The main rotor gearbox input shafts 218a, 218b connect the engine reduction gearboxes 216a, 216b to the main rotor gearbox 214 via, e.g., couplings. The main rotor gearbox 214 is also depicted as also connected to accessory gearboxes 222a, 222b.

The skilled artisan will recognize that the novel drive system 200 of the present invention provides for the first time, a drive system configuration that was designed to: minimize the number of single load path components, provide maximum system separation and redundancy, minimize maintenance required and maintenance related incidents, minimize the potential of loss of lube events, and maximize main rotor gearbox loss of lube capability. Thus, by providing completely independent or redundant engine reduction gearboxes 216a, 216b, the loss of an engine reduction gearbox does not lead to loss of flight power, because each engine reduction gearbox 216a, 216b is completely isolated from the remainder of the drive system via freewheeling clutches located in the main rotor gearbox 214. As such, using the present invention loss of a single reduction gearbox does not prevent continued safe flight.

More particularly, the present invention separates all the high-speed rotating components from the main rotor gearbox, and moves them into redundant reduction gearboxes. As such, the design and components of the present invention are such that even when there is a failure in a reduction gearbox, such a failure does not impact the main rotor gearbox operation, because even if the failed reduction gearbox loses torque transmission (because of the inclusion of freewheeling clutches in the MRGB) the reduction gearbox still operating will provide sufficient power to maintain flight from the engine associated with the operational reduction gearbox to safely operate and land the aircraft. By moving the high-speed rotating components away from the main rotor gearbox, the present invention greatly reduces the time and expense of maintenance to replace a reduction gearbox as it is no longer necessary to disassemble the main rotor gearbox to replace components during scheduled maintenance or the result of a reduction gearbox failure.

Several key elements of the novel drive system 200 of the present invention include the separation of dual engine reduction gearboxes, which are completely isolated from remainder of drive system via freewheeling clutches in the main rotor gearbox. Further, the drive system 200 provides dual accessory gearboxes separate from the main rotor gearbox. In addition, the distribution of the gearbox driven accessories is among the separate systems, thereby providing, for the first time, full redundant systems. Due to the use of redundant and separate power pathways, the failure of some accessories that would otherwise be critical (e.g., loss of hydraulic pumps, cooling blowers, generators, etc.), is overcome by the separate power pathway. Thus, if one accessory gearbox fails, or if one of the accessories associated with an accessory gearbox fails, the remaining redundant accessory gearbox and its associated accessories are designed to provide for safely operating and landing of the aircraft.

The present invention can be used in conjunction with pressurized or non-pressurized accessory gearboxes. For instance, the pressurized or non-pressurized accessory gearboxes include the gears that connect to an output from the main rotor gearbox or the engines. The pressurized or non-pressurized gearboxes will generally include one or more of the following: an oil level gauge, an oil level sensor, an oil filler cap, and/or a sump chip detector. The housing for the pressurized or non-pressurized accessory gearboxes can also include provisions for certain outputs, such as: a permanent magnet generator that generates an electrical output, a blower, a generator, or a hydraulic pump. The gears within the pressurized or non-pressurized accessory gearboxes are sized to provide the necessary speeds and torques required by each gearbox output. Typically, in non-pressurized gearboxes the internal parts of the gearbox are splash lubricated.

In certain embodiments, the accessory gearboxes have a lubrication system that is independent of the main rotor gearbox's lubrication system. This can decrease the frequency of loss-of-lube events by eliminating leak paths. Specifically, by providing independent lubrication systems for each of the accessory gearboxes, one can eliminate transfer tubes, hoses, and the like that would otherwise be necessary to provide circulation of lubricant between the main rotor gearbox and each of the accessory gearbox. Thus, in one embodiment, each of the accessory gearboxes has a non-pressurized lubrication system that is independent of the main rotor gearbox's lubrication system.

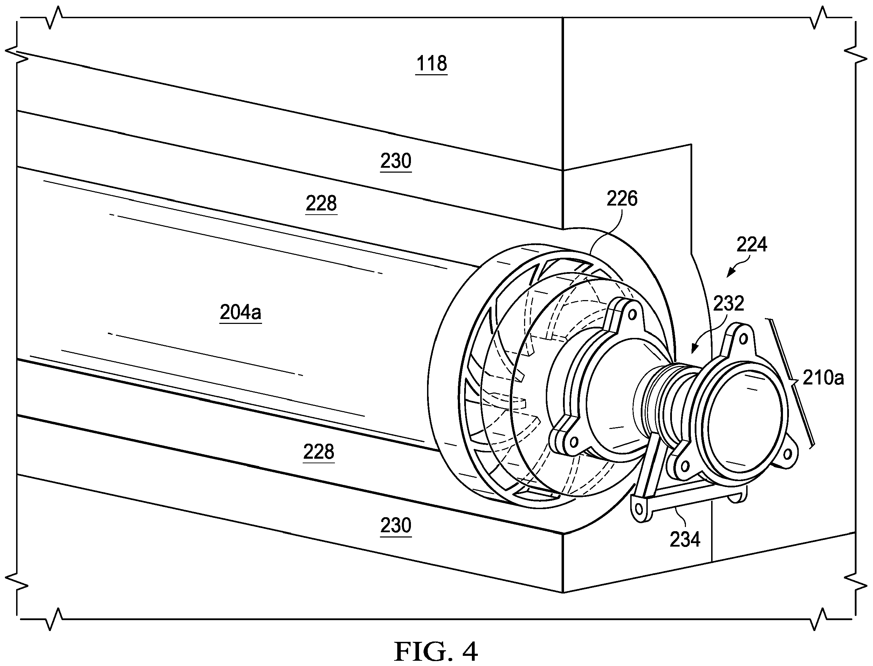

FIG. 4 shows a close-up, isometric view of a fan assembly 224 that is part of the drive system 200 of the present invention. Drive shaft 204a, which is nearest the engines, may be a composite or a metal shaft. The fan assembly 224 includes a fan 226 that may be integrated into connection assembly 210a and provides air flow over and around drive shaft 204a in order to reduce the temperatures to which drive shaft 204a is exposed (e.g., in the event of an engine fire). The drive shaft 204a is depicted in this embodiment within an opening 228 and surrounded by insulation 230, which also protects the drive shaft 204a from heat generated by the engine(s) (not depicted). The connection assembly 210a is depicted with a flexible coupling 232 and a hanger bearing assembly 234.

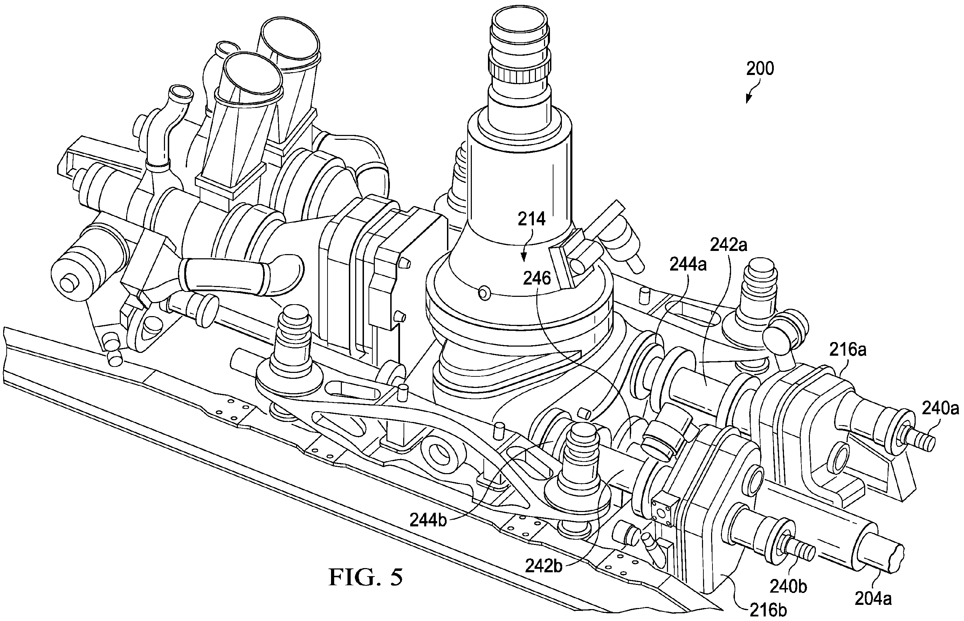

FIG. 5 shows an isometric view of a drive system 200 that provides maximum system separation and redundancy. Drive system 200 include two engine reduction gearboxes 216a, 216b, that are each depicted with an engine connection shaft 240a, 240b. In alternative embodiments, the engine reduction gearboxes 216a, 216b may be connected to one or more accessories, such as a generator, a blower, a pump or other accessory that draws power from the engine reduction gearboxes 216a, 216b. Each of the engine reduction gearboxes 216a, 216b is connected via a separate shaft 242a, 242b, to the main rotor gearbox 214. Thus, each of the engine connection shafts 240a, 240b provides a single drive system from the engines to the main rotor gearbox 214, each of which operates independently and redundantly to provide shaft power to the main rotor gearbox 214. Further, each of the engine reduction gearboxes 216a, 216b reduces the speed of rotation from the engine (e.g., up to a high speed at or near turbine engine speed of greater than 10,000 RPM) to a speed substantially lower than the high speed, a low speed of less than about 6,000 RPM prior to entering the main rotor gearbox 214. Thus, the main rotor gearbox 214 can be designed to operate more reliably, with components that are turning at a much lower speed. The drive system 200 also connects to the tail rotor via a tail rotor shaft 204. Each of the engine connection shafts 240a, 240b can further include, e.g., a clutch, or other mechanisms for connecting and disconnecting the engine reduction gearboxes 216a, 216b from the main rotor gearbox 214. Each of the shafts 242a, 242b can connect via freewheeling clutches 244a, 244b, depicted here on the main rotor gearbox 214, however, the skilled artisan will recognize that the freewheeling clutches 244a, 244b could also be positioned on the engine reduction gearboxes 216a, 216b or even between the engine reduction gearboxes 216a, 216b and the main rotor gearbox 214, or combinations of the same. Further, the shafts 242a, 242b that connect the engine reduction gearboxes 216a, 216b to the main rotor gearbox 214 can include flexible couplings to allow for pylon movement and can be separately uncoupled. For example, clutches can be connected to the shafts 242a, 242b, and/or to an output from the main rotor gearbox 214. In the embodiment of FIG. 4, these shafts 242a, 242b connect directly into the main rotor gearbox 214 at a freewheeling clutch 244a, 244b that allows the engines and reduction gearboxes 216a, 216b to have completely independent torque and speed. That is, in the event of an engine failure, or a loses torque transmission by one of the engine reduction gearboxes 216a, 216b, the associated freewheeling clutch 244a, 244b allows the main rotor gearbox 214 to continue operating at speed, receiving torque from the engine and engine reduction gearbox that remains operable. Further, each freewheeling unit allows for the individual start-up and shutdown of either engine. The shafts 242a, 242b can be, e.g., a one-piece drive shaft with integral couplings and anti-flail protection. The shafts 242a, 242b can be a single material or a composite material. Drive system 200 also includes a tail rotor disc brake 246 and calipers (not shown) for slowing or stopping drive system 200.

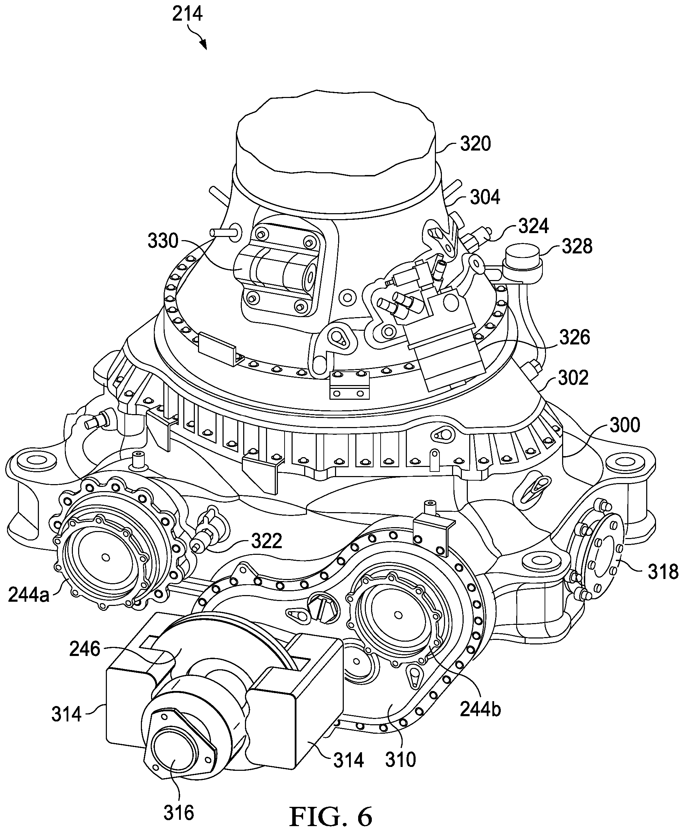

FIG. 6 shows a main rotor gearbox 214 of a helicopter according to an embodiment of the present application. The main rotor gearbox 214 includes a lower housing 302, a middle housing 304. Main rotor gearbox 214 includes a first drive input and clutch 244a, a second drive input and clutch 244b, a tail rotor gear assembly 310, a tail rotor disc brake 246 and calipers 314, a tail rotor drive output 316, a generator output 318, hydraulic pump drive output (not shown), first accessory drive output (not shown), second accessory drive output (not shown), oil pump drive output (not shown), and mast housing 320. Other features include tail rotor output section chip detector 322, mast bearing chip detector 324, planetary chip detector (not shown), oil filter 326, oil filler cap 328, non-rotating scissor link mounting bracket 330. The first drive input and clutch 244a and second drive input and clutch 244b allow for single engine start and decoupling of either engine/reduction gearbox for single engine operation. Thus, the main gear box 214 minimizes the number of single path drive system components and provides maximum system separation and redundancy.

Non-limiting examples of composite materials for use with the drive shafts include, e.g., metals, carbon fiber, metal-carbon fiber, fiber reinforcement unidirectional layers embedded in the thermoplastic polymer, or combinations thereof. For example, the composite drive shafts may be a composite tube that is a braided fiber and resin transfer molded component. Such components are typically more damage tolerant and have a higher ballistic survivability. The braided fiber may be either a two-dimensional or a three-dimensional braided fiber. However, it should be understood that the composite shaft may also be manufactured by filament winding, fiber placement, or any other processes that are deemed appropriate. The drive shafts can also include end adapters, which can be formed from a metallic material, such as aluminum, titanium, or steel, but may be formed from any other suitable rigid material, including non-metallic material. Composite materials and manufacturing of composite drive shafts are taught in, e.g., U.S. Patent No. 7,335,108.

All publications and patent applications mentioned in the specification are indicative of the level of skill of those skilled in the art to which this invention pertains.

All of the devices and/or methods disclosed and claimed herein can be made and executed without undue experimentation in light of the present disclosure. While the devices and/or and methods of this invention have been described in terms of preferred embodiments, it will be apparent to those of skill in the art that variations may be applied to the compositions and/or methods and in the steps or in the sequence of steps of the method described herein without departing from the concept and scope of the invention. All such similar substitutes and modifications apparent to those skilled in the art are deemed to be within the scope of the invention as defined by the appended claims.

Furthermore, no limitations are intended to the details of construction or design herein shown, other than as described in the claims below. Accordingly, the protection sought herein is as set forth in the claims below.

## Claims

1. An aircraft drive system (200) comprising:
a main rotor gearbox (114, 214) comprising a first and a second input;
a first drive system comprising a first engine reduction gearbox (216a) connecting a first engine (120a) to the first input of the main rotor gearbox (114, 214) at a reduced shaft speed;
a second drive system independent from and redundant with the first drive system, the second drive system comprising a second engine reduction gearbox (216b) connecting a second engine (120b) to the second input of the main rotor gearbox (114, 214) at the reduced shaft speed; and **characterized in that** it further comprises
two or more accessory gearboxes (116, 222a, 222b) connected directly to the main rotor gearbox (114, 214) independently from one another; and
a first accessory gearbox (116, 222a) of the two or more accessory gearboxes (116, 222a, 222b) connecting the main rotor gearbox (114, 214) with one or more accessories, the first accessory gearbox (116, 222a) having a non-pressurized lubrication system independent from a lubrication system associated with the main rotor gearbox (114, 214); and a second accessory gearbox (116, 222b) of the two or more accessory gearboxes (116 , 222a, 222b) connecting the main rotor gearbox (114, 214) with one or more accessories, the second accessory gearbox (116, 222b) having a non-pressurized lubrication system independent from a lubrication system associated with the main rotor gearbox (114, 214), wherein the second accessory gearbox (116, 222b) is independent from and redundant with the first accessory gearbox (116, 222a).

2. A method of providing redundant power to a main rotor gearbox comprising:
providing the main rotor gearbox (114, 214) comprising a first and a second input;
connecting a first drive system comprising a first engine reduction gearbox (216a) connecting a first engine (120a) to the first input of the main rotor gearbox (114, 214) at a reduced shaft speed;
connecting a second drive system independent from and redundant with the first drive system, the second drive system comprising a second engine reduction gearbox (216b) connecting a second engine (120b) to the second input of the main rotor gearbox (114, 214) at the reduced shaft speed; providing two or more accessory gearboxes (116, 222a, 222b); and
connecting the two or more accessory gearboxes (116, 222a, 222b) directly to the main rotor gearbox (114, 214) independently from one another; and
mounting a first accessory gearbox (216) of the two or more accessory gearboxes (116, 222a, 222b) connecting the main rotor gearbox (114, 214) with one or more accessories, the first accessory gearbox (116, 222a) having a non-pressurized lubrication system independent from a lubrication system associated with the main rotor gearbox (114, 214); and a second accessory gearbox (116, 222b) of the two or more accessory gearboxes (116, 222a, 222b) connecting the main rotor gearbox (114, 214) with one or more accessories, the second accessory gearbox (116, 222b) having a non-pressurized lubrication system independent from a lubrication system associated with the main rotor gearbox (114, 214), wherein the second accessory gearbox (116, 222b) is independent from and redundant with the first accessory gearbox (116, 222a).

3. The drive system of claim 1 or the method of claim 2, wherein the first and second engine reduction gearboxes (216a, 216b) comprises a plurality of gears that reduce a shaft speed from the first and second engines from 10,000 or greater revolutions per minute at an input of the first and second engine reduction gearboxes, respectively, to about 6,000 or fewer revolutions per minute at an output of the first and second engine reduction gearboxes (216a, 216b).

4. The drive system of claim 1 or of claim 3, or the method of claim 2 or of claim 3, further comprising a drive shaft (204e) with flexible couplings (212a, 212b) connecting each of the first and second engine reduction gearboxes (216a, 216b) to the first and second inputs of the main rotor gearbox (114, 214), respectively.

5. The drive system of claim 1 or of claim 3 or of claim 4, or the method of claim 2 or of claim 3 or of claim 4, wherein each of the first and second engine reduction gearboxes (216a, 216b) is independently lubricated and cooled.

6. The drive system of claim 1 or of any preceding system claim, or the method of claim 2 or of any preceding method claim, wherein each of the first and second engine reduction gearboxes (216a, 216b) are configured to be independently decoupled from the main rotor gearbox (114, 214).

7. The drive system of claim 1 or of any preceding system claim, or the method of claim 2 or of any preceding method claim, wherein an output shaft comprises a tail rotor disc brake (246) and calipers (316) for slowing or stopping the drive system.

8. The drive system of claim 1 or of any preceding system claim, or the method of claim 2 or of any preceding method claim, wherein the main rotor gearbox (114, 214) comprises a low speed overhung planetary gear system.

9. The drive system of claim 1 or of any preceding system claim, further comprising a drive shaft assembly (202) connected to an output of the main rotor gearbox (114, 214), wherein the drive shaft assembly (202) comprises one or more drive shafts (204a, 204b, 204c, 204d), each of the drive shafts connected to one or more bearing assemblies, the drive shaft assembly (202) having a proximal and a distal end, and an intermediate gear box (206) connected to the distal end of the one or more drive shafts (204a, 204b, 204c, 204d), wherein the intermediate gear box (206) is connected to a tail rotor gearbox (208) via a tail rotor drive shaft (204e, 126); or
the method of claim 2 or of any preceding method claim, further comprising connecting a drive shaft assembly (202) to an output of the main rotor gearbox (114, 214), wherein the drive shaft assembly (202) comprises one or more drive shafts (204a, 204b, 204c, 204d), each of the drive shafts connected to one or more bearing assemblies, the drive shaft assembly (202) having a proximal and a distal end, and an intermediate gear box (206) connected to the distal end of the one or more drive shafts (204a, 204b, 204c, 204d), wherein the intermediate gear box (206) is connected to a tail rotor gearbox (208) via a tail rotor drive shaft (204e, 126).

10. The drive system of claim 1 or of any preceding system claim, further comprising at least one of: one or more cooling fans, or one or more oil pumps, one or more hydraulic power packs, or one or more generators, each connected directly to the main rotor gearbox (114, 214) independently; or
the method of claim 2 or of any preceding method claim, further comprising providing at least one of: one or more cooling fans, or one or more oil pumps, one or more hydraulic power packs, or one or more generators, each connected directly to the main rotor gearbox (114, 214) independently.

11. The drive system of claim 1 or of any preceding system claim, further comprising an oil cooler mounted directly to the main rotor gearbox; or
the method of claim 2 or of any preceding method claim, further comprising mounting an oil cooler directly to the main rotor gearbox.

12. The drive system of claim 1 or of any preceding system claim, further comprising two or more hydraulic power packs wherein each of the two or more hydraulic power packs is independent from and redundant with the other hydraulic power packs; or
the method of claim 2 or of any preceding method claim, further comprising mounting two or more hydraulic power packs wherein each of the two or more hydraulic power packs is independent from and redundant with the other hydraulic power packs.

13. The drive system of claim 1 or of any preceding system claim, further comprising two or more oil cooler blowers wherein each of the two or more oil cooler blowers is independent from and redundant with the other oil cooler blowers; or
the method of claim 2 or of any preceding method claim, further comprising mounting two or more oil cooler blowers wherein each of the two or more oil cooler blowers is independent from and redundant with the other oil cooler blowers.

14. The drive system of claim 1 or of any preceding system claim, further comprising two or more generators wherein each of the two or more generators is independent from and redundant with the other generators; or
the method of claim 2 or of any preceding method claim, further comprising mounting two or more generators wherein each of the two or more generators is independent from and redundant with the other generators..

15. A helicopter comprising:
a fuselage (102);
a drive system according to claim 1 or of any preceding claim, wherein the main rotor gearbox is coupled to the fuselage;
at least a first engine and a second engine;
a rotor system connected to the main rotor gearbox to provide flight.

## Patentansprüche

1. Luftfahrzeug-Antriebssystem (200), das Folgendes umfasst:
ein Hauptrotorgetriebe (114, 214), das einen ersten und einen zweiten Eingang besitzt;
ein erstes Antriebssystem, das ein erstes Kraftmaschinen-Untersetzungsgetriebe (216a) umfasst, das eine erste Kraftmaschine (120a) mit dem ersten Eingang des Hauptrotorgetriebes (114, 214) mit einer verringerten Wellendrehzahl verbindet;
ein zweites Antriebssystem, das von dem ersten Antriebssystem unabhängig und damit redundant ist, wobei das zweite Antriebssystem ein zweites Kraftmaschinen-Untersetzungsgetriebe (216b) umfasst, das eine zweite Kraftmaschine (120b) mit dem zweiten Eingang des Hauptrotorgetriebes (114, 214) mit der verringerten Wellendrehzahl verbindet;
und **dadurch gekennzeichnet, dass** es ferner Folgendes umfasst:
zwei oder mehr Zusatzgerät-Getriebe (116, 222a, 222b), die unabhängig voneinander direkt mit dem Hauptrotorgetriebe (114, 214) verbunden sind; und dass
ein erstes Zusatzgerät-Getriebe (116, 222a) der zwei oder mehr Zusatzgerät-Getriebe (116, 222a, 222b) das Hauptrotorgetriebe (114, 214) mit einem oder mehreren Zusatzgeräten verbindet, wobei das erste Zusatzgerät-Getriebe (116, 222a) ein druckloses Schmierungssystem besitzt, das von einem Schmierungssystem, das dem Hauptrotorgetriebe (114, 214) zugeordnet ist, unabhängig ist; und ein zweites Zusatzgerät-Getriebe (116, 222b) der zwei oder mehr Zusatzgerät-Getriebe (116, 222a, 222b) das Hauptrotorgetriebe (114, 214) mit einem oder mehreren Zusatzgeräten verbindet, wobei das zweite Zusatzgerät-Getriebe (116, 222b) ein druckloses Schmierungssystem besitzt, das von einem Schmierungssystem, das dem Hauptrotorgetriebe (114, 214) zugeordnet ist, unabhängig ist, wobei das zweite Zusatzgerät-Getriebe (116, 222b) von dem ersten Zusatzgerät-Getriebe (116, 222a) unabhängig und damit redundant ist.

2. Verfahren zum Bereitstellen von redundanter Leistung für ein Hauptrotorgetriebe, das Folgendes umfasst:
Bereitstellen des Hauptrotorgetriebes (114, 214), das einen ersten und einen zweiten Eingang besitzt;
Verbinden eines ersten Antriebssystems, das ein erstes Kraftmaschinen-Untersetzungsgetriebe (216a) umfasst, das eine erste Kraftmaschine (120a) mit dem ersten Eingang des Hauptrotorgetriebes (114, 214) mit einer verringerten Wellendrehzahl verbindet;
Verbinden eines zweiten Antriebssystems, das von dem ersten Antriebssystem unabhängig und damit redundant ist, wobei das zweite Antriebssystem ein zweites Kraftmaschinen-Untersetzungsgetriebe (216b) umfasst, das eine zweite Kraftmaschine (120b) mit dem zweiten Eingang des Hauptrotorgetriebes (114, 214) mit der verringerten Wellendrehzahl verbindet; Bereitstellen von zwei oder mehr Zusatzgerät-Getrieben (116, 222a, 222b); und
Verbinden der zwei oder mehr Zusatzgerät-Getriebe (116, 222a, 222b) unabhängig voneinander und direkt mit dem Hauptrotorgetriebe (114, 214); und
Montieren eines ersten Zusatzgerät-Getriebes (216) der zwei oder mehr Zusatzgerät-Getriebe (116, 222a, 222b), das das Hauptrotorgetriebe (114, 214) mit einem oder mehreren Zusatzgeräten verbindet, wobei das erste Zusatzgerät-Getriebe (116, 222a) ein druckloses Schmierungssystem besitzt, das von einem Schmierungssystem, das dem Hauptrotorgetriebe (114, 214) zugeordnet ist, unabhängig ist; und eines zweiten Zusatzgerät-Getriebes (116, 222b) der zwei oder mehr Zusatzgerät-Getriebe (116, 222a, 222b), das das Hauptrotorgetriebe (114, 214) mit einem oder mehreren Zusatzgeräten verbindet, wobei das zweite Zusatzgerät-Getriebe (116, 222b) ein druckloses Schmierungssystem besitzt, das von einem Schmierungssystem, das dem Hauptrotorgetriebe (114, 214) zugeordnet ist, unabhängig ist, wobei das zweite Zusatzgerät-Getriebe (116, 222b) von dem ersten Zusatzgerät-Getriebe (116, 222a) unabhängig und damit redundant ist.

3. Antriebssystem nach Anspruch 1 oder Verfahren nach Anspruch 2, wobei das erste und das zweite Kraftmaschinen-Untersetzungsgetriebe (216a, 216b) mehrere Zahnräder enthalten, die eine Wellendrehzahl von der ersten und der zweiten Kraftmaschine von 10000 oder mehr Umdrehungen pro Minute an einem Eingang des ersten bzw. des zweiten Kraftmaschinen-Untersetzungsgetriebes auf etwa 6000 oder weniger Umdrehungen pro Minute an einem Ausgang des ersten bzw. des zweiten Kraftmaschinen-Untersetzungsgetriebes (216a, 216b) verringern.

4. Antriebssystem nach Anspruch 1 oder Anspruch 3 oder Verfahren nach Anspruch 2 oder Anspruch 3, das ferner eine Antriebswelle (204e) mit biegsamen Kopplungen (212a, 212b), die das erste und das zweite Kraftmaschinen-Untersetzungsgetriebe (216a, 216b) mit dem ersten bzw. dem zweiten Eingang des Hauptrotorgetriebes (114, 214) verbinden, umfasst.

5. Antriebssystem nach Anspruch 1 oder Anspruch 3 oder Anspruch 4 oder Verfahren nach Anspruch 2 oder Anspruch 3 oder Anspruch 4, wobei das erste und das zweite Kraftmaschinen-Untersetzungsgetriebe (216a, 216b) unabhängig geschmiert und gekühlt werden.

6. Antriebssystem nach Anspruch 1 oder einem vorhergehenden Systemanspruch oder Verfahren nach Anspruch 2 oder einem vorhergehenden Verfahrensanspruch, wobei das erste und das zweite Kraftmaschinen-Untersetzungsgetriebe (216a, 216b) so konfiguriert sind, dass sie von dem Hauptrotorgetriebe (114, 214) unabhängig entkoppelt werden können.

7. Antriebssystem nach Anspruch 1 oder einem vorhergehenden Systemanspruch oder Verfahren nach Anspruch 2 oder einem vorhergehenden Verfahrensanspruch, wobei eine Ausgangswelle eine Heckrotor-Scheibenbremse (246) und Bremssättel (316) zum Verlangsamen oder Anhalten des Antriebssystems umfasst.

8. Antriebssystem nach Anspruch 1 oder einem vorhergehenden Systemanspruch oder Verfahren nach Anspruch 2 oder einem vorhergehenden Verfahrensanspruch, wobei das Hauptrotorgetriebe (114, 214) ein Niedrigdrehzahlüberhang-Planetengetriebesystem enthält.

9. Antriebssystem nach Anspruch 1 oder einem vorhergehenden Systemanspruch, das ferner eine Antriebswellenanordnung (202), die mit einem Ausgang des Hauptrotorgetriebes (114, 214) verbunden ist, umfasst, wobei die Antriebswellenanordnung (202) eine oder mehrere Antriebswellen (204a, 204b, 204c, 204d) umfasst, wobei jede der Antriebswellen mit einer oder mehreren Lageranordnungen verbunden ist, wobei die Antriebswellenanordnung (202) ein proximales Ende und ein distales Ende und ein Zwischengetriebe (206), das mit dem distalen Ende der einen oder der mehreren Antriebswellen (204a, 204b, 204c, 204d) verbunden ist, besitzt, wobei das Zwischengetriebe (206) mit einem Heckrotor-Getriebe (208) über eine Heckrotor-Antriebswelle (204e, 126) verbunden ist; oder
Verfahren nach Anspruch 2 oder einem vorhergehenden Verfahrensanspruch, das ferner das Verbinden einer Antriebswellenanordnung (202) mit einem Ausgang des Hauptrotorgetriebes (114, 214) umfasst, wobei die Antriebswellenanordnung (202) eine oder mehrere Antriebswellen (204a, 204b, 204c, 204d) umfasst, wobei jede der Antriebswellen mit einer oder mehreren Lageranordnungen verbunden ist, wobei die Antriebswellenanordnung (202) ein proximales und ein distales Ende und ein Zwischengetriebe (206), das mit dem distalen Ende der einen oder der mehreren Antriebswellen (204a, 204b, 204c, 204d) verbunden ist, besitzt, wobei das Zwischengetriebe (206) mit einem Heckrotor-Getriebe (208) über eine Heckrotor-Antriebswelle (204e, 126) verbunden ist.

10. Antriebssystem nach Anspruch 1 oder einem vorhergehenden Systemanspruch, das ferner wenigstens eines der Folgenden umfasst: ein oder mehrere Kühlgebläse oder eine oder mehrere Ölpumpen, einen oder mehrere Hydraulikenergiespeicher oder einen oder mehrere Generatoren, die jeweils direkt und unabhängig voneinander mit dem Hauptrotorgetriebe (114, 214) verbunden sind; oder
Verfahren nach Anspruch 2 oder einem vorhergehenden Verfahrensanspruch, das ferner das Bereitstellen von wenigstens einem der Folgenden umfasst: einem oder mehreren Kühlgebläsen oder einer oder mehreren Ölpumpen, einem oder mehreren Hydraulikenergiespeichern oder einem oder mehreren Generatoren, die jeweils direkt und unabhängig voneinander mit dem Hauptrotorgetriebe (114, 214) verbunden sind.

11. Antriebssystem nach Anspruch 1 oder einem vorhergehenden Systemanspruch, das ferner einen Ölkühler umfasst, der direkt an dem Hauptrotorgetriebe montiert ist; oder
Verfahren nach Anspruch 2 oder einem vorhergehenden Verfahrensanspruch, das ferner das Montieren eines Ölkühlers direkt an dem Hauptrotorgetriebe umfasst.

12. Antriebssystem nach Anspruch 1 oder einem vorhergehenden Systemanspruch, das ferner zwei oder mehr Hydraulikenergiespeicher umfasst, wobei jeder der zwei oder mehr Hydraulikenergiespeicher von den jeweils anderen Hydraulikenergiespeichern unabhängig und damit redundant ist; oder
Verfahren nach Anspruch 2 oder einem vorhergehenden Verfahrensanspruch, das ferner das Montieren von zwei oder mehr Hydraulikenergiespeichern umfasst, wobei jeder der zwei oder mehr Hydraulikenergiespeicher von den jeweils anderen Hydraulikenergiespeichern unabhängig und damit redundant ist.

13. Antriebssystem nach Anspruch 1 oder einem vorhergehenden Systemanspruch, das ferner zwei oder mehr Ölkühlergebläse umfasst, wobei jedes der zwei oder mehr Ölkühlergebläse von den jeweils anderen Ölkühlergebläsen unabhängig und damit redundant ist; oder
Verfahren nach Anspruch 2 oder einem vorhergehenden Verfahrensanspruch, das ferner das Montieren von zwei oder mehr Ölkühlergebläsen umfasst, wobei jedes der zwei oder mehr Ölkühlergebläse von den jeweils anderen Ölkühlergebläsen unabhängig und damit redundant ist.

14. Antriebssystem nach Anspruch 1 oder einem vorhergehenden Systemanspruch, das ferner zwei oder mehr Generatoren umfasst, wobei jeder der zwei oder mehr Generatoren von den jeweils anderen Generatoren unabhängig und damit redundant ist; oder
Verfahren nach Anspruch 2 oder einem vorhergehenden Verfahrensanspruch, das ferner das Montieren von zwei oder mehr Generatoren umfasst, wobei jeder der zwei oder mehr Generatoren von den jeweils anderen Generatoren unabhängig und damit redundant ist.

15. Helikopter, der Folgendes umfasst:
einen Rumpf (102);
ein Antriebssystem nach Anspruch 1 oder einem vorhergehenden Systemanspruch, wobei das Hauptrotorgetriebe mit dem Rumpf gekoppelt ist;
wenigstens eine erste Kraftmaschine und eine zweite Kraftmaschine;
ein Rotorsystem, das mit dem Hauptrotorgetriebe verbunden ist, um Flugfähigkeit bereitzustellen.

## Revendications

1. Système d'entraînement pour aéronef (200) comprenant :
une boîte de transmission de rotor principal (114, 214) comportant une première et une deuxième entrée ;
un premier système d'entraînement comprenant une boîte de réduction de premier moteur (216a) reliant un premier moteur (120a) à la première entrée de la boîte de transmission du rotor principal (114, 214) à une vitesse d'arbre réduite ;
un deuxième système d'entraînement indépendant du premier système d'entraînement et redondant par rapport à celui-ci, ce deuxième système d'entraînement comprenant une boîte de réduction de deuxième moteur (216b) reliant un deuxième moteur (120b) à la deuxième entrée de la boîte de transmission du rotor principal (114, 214) à la vitesse d'arbre réduite ; et **caractérisé en ce qu'**il comprend en outre
deux boîtes de transmission d'accessoires (116, 222a, 222b) ou plus reliées directement à la boîte de transmission du rotor principal (114, 214) indépendamment les une des autres ; et
une première boîte de transmission d'accessoire (116, 222a) des deux boîtes de transmission d'accessoires (116, 222a, 222b) ou plus reliant la boîte de transmission du rotor principal (114, 214) à un ou à plusieurs accessoires, la première boîte de transmission d'accessoire (116, 222a) ayant un circuit de lubrification non pressurisé indépendant d'un circuit de lubrification associé à la boîte de transmission du rotor principal (114, 214) ; et une deuxième boîte de transmission d'accessoire (116, 222b) des deux boîtes de transmission d'accessoires (116, 222a, 222b) ou plus reliant la boîte de transmission du rotor principal (114, 214) à un ou plusieurs accessoires, la deuxième boîte de transmission d'accessoire (116, 222b) ayant un circuit de lubrification non pressurisé indépendant d'un circuit de lubrification associé à la boîte de transmission du rotor principal (114, 214), la deuxième boîte de transmission d'accessoire (116, 222b) étant indépendante de la première boîte de transmission d'accessoire (116, 222a) et redondante par rapport à celle-ci.

2. Procédé de fourniture d'une puissance redondante à une boîte de transmission de rotor principal comprenant :
la fourniture de la boîte de transmission du rotor principal (114, 214) comportant une première et une deuxième entrée ;
le raccordement d'un premier système d'entraînement comprenant une boîte de réduction de premier moteur (216a) reliant un premier moteur (120a) à la première entrée de la boîte de transmission du rotor principal (114, 214) à une vitesse d'arbre réduite ;
le raccordement d'un deuxième système d'entraînement indépendant du premier système d'entraînement et redondant par rapport à celui-ci, ce deuxième système d'entraînement comprenant une boîte de réduction de deuxième moteur (216b) reliant un deuxième moteur (120b) à la deuxième entrée de la boîte de transmission du rotor principal (114, 214) à la vitesse d'arbre réduite ;
la fourniture de deux boîtes de transmission d'accessoires (116, 222a, 222b) ou plus ; et
le raccordement de ces deux boîtes de transmission d'accessoires (116, 222a, 222b) ou plus directement à la boîte de transmission du rotor principal (114, 214) indépendamment les unes des autres ; et
le montage d'une première boîte de transmission d'accessoire (216) des deux boîtes de transmission d'accessoires (116, 222a, 222b) ou plus reliant la boîte de transmission du rotor principal (114, 214) à un ou plusieurs accessoires, cette première boîte de transmission d'accessoire (116, 222a) ayant un circuit de lubrification non pressurisé indépendant d'un circuit de lubrification associé à la boîte de transmission du rotor principal (114, 214) ; et d'une deuxième boîte de transmission d'accessoire (116, 222b) des deux boîtes de transmission d'accessoires (116, 222a, 222b) ou plus reliant la boîte de transmission du rotor principal (114, 214) à un ou plusieurs accessoires, cette deuxième boîte de transmission d'accessoire (116, 222b) ayant un circuit de lubrification non pressurisé indépendant d'un circuit de lubrification associé à la boîte de transmission du rotor principal (114, 214), cette deuxième boîte de transmission d'accessoire (116, 222b) étant indépendante de la première boîte de transmission d'accessoire (116, 222a) et redondante par rapport à celle-ci.

3. Système d'entraînement selon la revendication 1 ou procédé selon la revendication 2, dans lequel les boîtes de réduction du premier moteur et du deuxième moteur (216a, 216b) consistent en une pluralité d'engrenages qui réduisent une vitesse d'arbre venant du premier et du deuxième moteur de 10 000 tours/minute ou plus à une entrée des boîtes de réduction du premier et du deuxième moteur, respectivement, à environ 6 000 tours/minute ou moins à une sortie des boîtes de réduction du premier moteur et du deuxième moteur (216a, 216b).

4. Système d'entraînement selon la revendication 1 ou la revendication 3, ou procédé selon la revendication 2 ou la revendication 3, comprenant en outre un arbre d'entraînement (204e) avec des accouplements flexibles (212a, 212b) reliant chacune des boîtes de réduction du premier moteur et du deuxième moteur (216a, 216b) aux première et deuxième entrées de la boîte de transmission du rotor principal (114, 214), respectivement.

5. Système d'entraînement selon la revendication 1 ou la revendication 3 ou la revendication 4, ou procédé selon la revendication 2 ou la revendication 3 ou la revendication 4, dans lequel chacune des boîtes de réduction du premier moteur et du deuxième moteur (216a, 216b) est lubrifiée et refroidie indépendamment.

6. Système d'entraînement selon la revendication 1 ou selon l'une quelconque des revendications précédentes du système, ou procédé selon la revendication 2 ou selon l'une quelconque des revendications précédentes du procédé, dans lequel chacune des boîtes de réduction du premier moteur et du deuxième moteur (216a, 216b) est configurée de façon à être désaccouplée indépendamment de la boîte de transmission du rotor principal (114, 214).

7. Système d'entraînement selon la revendication 1 ou selon l'une quelconque des revendications précédentes du système ou procédé selon la revendication 2 ou selon l'une quelconque des revendications précédentes du procédé, dans lequel un arbre de sortie comporte un frein à disque de rotor de queue (246) et des étriers de frein (316) pour ralentir ou arrêter le système d'entraînement.

8. Système d'entraînement selon la revendication 1 ou selon l'une quelconque des revendications précédentes du système, ou procédé selon la revendication 2 ou selon l'une quelconque des revendications précédentes du procédé, dans lequel la boîte de transmission du rotor principal (114, 214) consiste en un train planétaire en porte-à-faux à basse vitesse.

9. Système d'entraînement selon la revendication 1 ou selon l'une quelconque des revendications précédentes du système comprenant en outre un ensemble d'arbres d'entraînement (202) relié à une sortie de la boîte de transmission du rotor principal (114, 214), cet ensemble d'arbres d'entraînement (202) comprenant un ou plusieurs arbres d'entraînement (204a, 204b, 204c, 204d), chacun de ces arbres d'entraînement étant relié à un ou plusieurs ensembles paliers, l'ensemble d'arbres d'entraînement (202) ayant une extrémité proximale et une extrémité distale, et une boîte de transmission intermédiaire (206) reliée à l'extrémité distale d'un ou de plusieurs arbres d'entraînement (204a, 204b, 204c, 204d), cette boîte de transmission intermédiaire (206) étant reliée à une boîte de transmission de rotor de queue (208) par l'intermédiaire d'un arbre d'entraînement de rotor de queue (204e, 126) ; ou
procédé selon la revendication 2 ou selon l'une quelconque des revendications précédentes du procédé, comprenant en outre le raccordement d'un ensemble d'arbres d'entraînement (202) à une sortie de la boîte de transmission du rotor principal (114, 214), cet ensemble d'arbres d'entraînement (202) comportant un ou plusieurs arbres d'entraînement (204a, 204b, 204c, 204d), chacun de ces arbres d'entraînement étant relié à un ou plusieurs ensembles paliers, l'ensemble d'arbres d'entraînement (202) ayant une extrémité proximale et une extrémité distale, et une boîte de transmission intermédiaire (206) reliée à l'extrémité distale du ou des arbres d'entraînement (204a, 204b, 204c, 204d), cette boîte de transmission intermédiaire (206) étant reliée à une boîte de transmission de rotor de queue (208) par l'intermédiaire d'un arbre d'entraînement de rotor de queue (204e, 126).

10. Système d'entraînement selon la revendication 1 ou selon l'une quelconque des revendications précédentes du système, comprenant en outre au moins un des éléments suivants : un ou plusieurs ventilateurs de refroidissement, ou une ou plusieurs pompes à huile, un ou plusieurs groupes hydrauliques, ou une ou plusieurs génératrices, chaque élément étant relié directement à la boîte de transmission du rotor principal (114, 214) indépendamment ; ou
procédé selon la revendication 2 ou selon l'une quelconque des revendications précédentes du procédé, comprenant en outre la fourniture d'au moins un des éléments suivants : un ou plusieurs ventilateurs de refroidissement, ou une ou plusieurs pompes à huile, un ou plusieurs groupes hydrauliques, ou une ou plusieurs génératrices, chaque élément étant relié directement à la boîte de transmission du rotor principal (114, 214) indépendamment.

11. Système d'entraînement selon la revendication 1 ou selon l'une quelconque des revendications précédentes du système, comprenant en outre un refroidisseur d'huile monté directement sur la boîte de transmission du rotor principal ; ou
procédé selon la revendication 2 ou selon l'une quelconque des revendications précédentes du procédé, comprenant en outre le montage d'un refroidisseur d'huile directement sur la boîte de transmission du rotor principal.

12. Système d'entraînement selon la revendication 1 ou selon l'une quelconque des revendications précédentes du système, comprenant en outre deux groupes hydrauliques ou plus, chacun de ces deux groupes hydrauliques ou plus étant indépendant des autres groupes hydrauliques et redondant par rapport à ceux-ci ; ou
procédé selon la revendication 2 ou selon l'une quelconque des revendications précédentes du procédé, dans lequel chacun des deux groupes hydrauliques ou plus est indépendant des autres groupes hydrauliques et redondant par rapport à ceux-ci.

13. Système d'entraînement selon la revendication 1 ou selon l'une quelconque des revendications précédentes du système, comprenant en outre deux soufflantes de refroidisseur d'huile ou plus, chacune de ces deux soufflantes de refroidisseur d'huile ou plus étant indépendante des autres soufflantes de refroidisseur d'huile ou étant redondante par rapport à celles-ci ; ou
procédé selon la revendication 2 ou selon l'une quelconque des revendications précédentes du procédé, comprenant en outre le montage de deux soufflantes de refroidisseur d'huile ou plus, chacune de ces deux soufflantes de refroidisseur d'huile ou plus étant indépendante des autres soufflantes de refroidisseur d'huile ou étant redondante par rapport à celles-ci.

14. Système d'entraînement selon la revendication 1 ou selon l'une quelconque des revendications précédentes du système, comprenant en outre deux génératrices ou plus, chacune de ces deux génératrices ou plus étant indépendante des autres génératrices ou étant redondante par rapport à celles-ci ; ou
procédé selon la revendication 2 ou selon l'une quelconque des revendications précédentes du procédé, comprenant en outre le montage de deux génératrices ou plus, chacune de ces deux génératrices ou plus étant indépendante des autres génératrices ou étant redondante par rapport à celles-ci.

15. Hélicoptère comprenant :
un fuselage (102) ;
un système d'entraînement selon la revendication 1 ou selon l'une quelconque des revendications précédentes du système, dans lequel la boîte de transmission du rotor principal est accouplée au fuselage ;
au moins un premier moteur et un deuxième moteur ;
un système de rotors relié à la boîte de transmission du rotor principal pour permettre le vol.
